# EUROPÄISCHE PATENTSCHRIFT

(11) **EP 0 892 192 B1**
(45) Veröffentlichungstag und Bekanntmachung des Hinweises auf die Patenterteilung: **30.05.2007**
(21) Anmeldenummer: 98112136.1
(22) Anmeldetag: 01.07.1998
(51) Int. Cl.: F16F 1/373, F16F 3/087, B60K 5/12

(54) **Pendelstütze für ein Aggregat in einem Kraftfahrzeug und elastisches Aggregatelager**
Sway braze for an aggregate in a motor vehicle and elastic support for an aggregate
Support pendulaire pour un agrégat dans un véhicule automobile et support élastique pour un agrégat

(30) Priorität: 19.07.1997 DE 19731128
(43) Veröffentlichungstag der Anmeldung: 20.01.1999
(73) Patentinhaber: Volkswagen Aktiengesellschaft, 38436 Wolfsburg (DE)
(72) Erfinder: Götzke, Frank, 38312 Gr. Flötke (DE)
(74) Vertreter: Beck, Michael Rudolf

(56) Entgegenhaltungen:
- EP-A- 0 438 760
- DE-A- 4 139 047
- DE-A- 19 506 808
- DE-U- 7 230 365
- FR-A- 1 309 708
- GB-A- 781 359
- US-A- 3 139 152
- US-A- 3 402 782
- US-A- 3 402 924
- US-A- 3 409 284
- US-A- 3 904 226
- US-A- 5 014 967

## Beschreibung

Die Erfindung bezieht sich auf eine Pendelstütze als einwertiges Lager für ein Aggregat in einem Kraftfahrzeug, insbesondere den Motor und das Getriebe, zur Abstützung von durch das Aggregat in Richtung ihrer Längsachse eingebrachten Druck- und Zugkräften. Insbesondere bezieht sich die Erfindung auf eine Pendelstütze nach dem Oberbegriff von Patentanspruch 1, weiterhin auf ein elastisches Aggregatlager nach dem Oberbegriff von Patentanspruch 9.

Die Lagerung von Motor und Getriebe in einem Kraftfahrzeug erfolgt durch mehrere an der Karosserie angeordnete Lager, die hinsichtlich ihrer federnden Eigenschaften und ihrer Freiheitsgrade unterschiedlich ausgelegt sind. Wünschenswert ist es, den Motor und das Getriebe in einem modernen Kraftfahrzeug möglichst weich zu lagern, wobei relativ große Amplituden und die Gefahr des Aufschaukelns der Motorschwingungen durch Überlappungen, aber auch quasi-statische Kräfte durch die in bestimmten Fahrsituationen abgesetzten Momente und durch Brems- und Schleudervorgänge zu berücksichtigen sind, was zu elastischen Motorlagern mit einem abgestimmten Kennlinienverlauf und abgestimmter Dämpfung geführt hat.

Die bei einem Lastwechsel bzw. beim Beschleunigen oder Verzögern in Fahrzeuglängsrichtung auftretenden Druck- und Zugkräfte und die beim sogenannten Abstellschlagen eines querliegenden Motors auftretenden Zugkräfte können bei Fahrzeugen mit quer zur Fahrtrichtung liegendem Aggregat durch eine an der Karosserie mit einem elastischen Lager gehalterte Pendelstütze aufgenommen werden, die nur belastet wird, wenn ein Kraftmoment anliegt.

Eine der Anmelderin allgemein bekannte Pendelstütze nach dem Oberbegriff von Anspruch 1 weist einen Stützarm, zwei in Richtung deren Längsachse zwischen zwei Anlageplatten angeordnete elastische Lagerblöcke, ein zwischen den Lagerblöcken angeordnetes Befestigungsglied mit Aufnahmen für die Lagerblöcke und eine in Axialbohrungen der Lagerblöcke und des Befestigungsgliedes angeordnete Spannschraube auf, welche die Anlageplatten gegeneinander vorspannt. Das Befestigungsglied ist an der Fahrzeugkarosserie angeordnet. Beim Abstellen des Motors, insbesondere eines Dieselmotors oder eines hochverdichteten Benzinmotors, kann es zu dem unerwünschten Nachschlagen des Motors kommen, bei dem der in Fahrzeugrichtung hinter dem Befestigungsglied angeordnete Lagerblock elastisch zusammengedrückt und der in Fahrzeugrichtung vorn, also zwischen dem Befestigungsglied und dem Stützarm angeordnete Lagerblock völlig entspannt und überdies mechanisch entkoppelt werden kann, was beim nachfolgenden Zurückschnellen des Stützarmes zu einem harten Schlag am Befestigungsglied und an der Karosserie sowie an Motor und Getriebe führt. Dieser Schlag ist für die Fahrzeuginsassen deutlich spürbar und führt zusätzlich auch zu hochfrequenten Geräuschentwicklungen durch ein Aneinanderschlagen der in diesen Aggregaten angeordneten Einzelbauteile, z. B. Zahnräder, durch deren notwendiges Spiel zwischen den Zahnflanken sowie auch an Karosseriebauteilen.

Der prinzipielle Aufbau eines elastischen Motorlagers, allerdings als tragendes schwingungsdämpfendes Lager mit auch radialem Freiweg, ist in der DE 19506808 C2 beschrieben. Dieses Lager weist zwei koaxiale, elastomere Trageelemente auf, die zwischen beabstandeten Anschlagplatten und einer mittleren Trageeinrichtung verspannt sind, wobei die Anschlagplatten über ein hülsenförmiges Kernteil verbunden sind, das durch eine hohlzylindrische Ausnehmung der mittleren Trageeinrichtung geführt ist und eine Axialbohrung zur Aufnahme einer Spannschraube aufweist, und wobei die Trageeinrichtung die freien Endbereiche der Trageelemente abstützt. Um bei diesem Lager eine federnde Aufnahme der mittleren Trageeinrichtung in allen Einfederungspositionen sicherzustellen, wobei geringe radiale Federkonstanten und ein großer axialer und radialer Freiweg vorliegen sollen, ist eine geometrisch unterschiedliche Gestaltung der beiden Trageelemente und der diese umgebenden Metallteile so ausgelegt, daß die Verformung der elastischen Trageelemente mit steigender Einfederung von einer Druck-, Schub- und/ oder Biegebeanspruchung durch Abrolleffekte in eine Druckverformung übergeht. Ein ähnliches Traglager, dessen Lagerblock zur Einstellung der Federkennlinie eine Schar von quer zur Längsachse verlaufenden Kanälen aufweist, ist aus der DE 41 39 047 A1, welche als nächstliegenden Stand der Technik zu Anspruch 9 angesehen wird, bekannt.

Aufgabe der Erfindung ist es nun, die unerwünschten Auswirkungen des Abstellschlagens zu mindern oder zu beseitigen.

Diese Aufgabe wird durch eine Pendelstütze mit den Merkmalen des Anspruchs 1 gelöst, sowie weiterhin durch ein elastisches Aggregatlager gemäß Patentanspruch 9.

Weitere vorteilhafte Ausgestaltungen sind in den abhängigen Patentansprüchen angegeben.

Im Bereich zwischen dem Boden bzw. Grund der Ausnehmungen und der Axialbohrung können wenigstens zwei achsparallele Kanäle mit einer Gesamtquerschnittsfläche von 5 bis 15% von der durch die Ausnehmungen umschlossenen Querschnittsfläche vorgesehen sein. Die Summe der Weiten der Ausnehmungen, also die Gesamtdicke des ausgenommenen Materials, beträgt gegenüber der Dicke des Lagerblockes in axialer Richtung 20 bis 35 %, vorzugsweise jedoch 30 %, und die im Bereich der Ausnehmungen umschlossene Querschnittsfläche gegenüber der des vollen Halterungsblockes ebenfalls 20 bis 35 %, vorzugsweise jedoch 35 %, wobei der Lagerblock drei gleich weite und gleich tiefe Ausnehmungen aufweisen kann.

Die Kanäle können Durchgangslöcher mit einem Durchmesser von mindestens 6 mm sein.

Das Material der Lagerblöcke weist vorzugsweise eine Shore-Härte von 40 bis 50 auf.

Ein derartig gestalteter Lagerblock ist in axialer Richtung wesentlich weicher als ein voller Lagerblock und läßt sich in dieser Richtung weit mehr elastisch zusammendrücken als ein voller Lagerblock, hat jedoch im zusammengedrückten Zustand (Einbauzustand) den gleichen Kennlinienverlauf wie der volle Lagerblock. Das im Bereich zwischen dem Boden der Ausnehmungen und der Axialbohrung befindliche Material wird elastisch in die Ausnehmungen gedrückt. Unterstützt wird dieser Effekt durch das Vorsehen von zusätzlichen Durchgangslöchern, in die zusätzlich Material gedrückt werden kann.

Dieser "weiche" Lagerblock kann durch seine Gestaltung den durch die rückschlagende Pendelstütze ausgeübten Druck beim Abstellschlagen aufnehmen und dämpft diesen, so daß eine Übertragung auf die Fahrzeugkarosserie ebenfalls stark gedämpft erfolgt. Überdies wird auch eine Verbesserung der Federeigenschaften in radialer Richtung erreicht,wodurch eine Schwingungsübertragung in Hoch- und Querrichtung in den Hilfsrahmen weitestgehend vermieden wird.

Die Erfindung wird nachstehend anhand eines Ausführungsbeispiels erläutert. In der zugehörigen Zeichnung zeigen:
- Fig. 1:: eine an einem Hilfsrahmen eines Kraftfahrzeuges anzuordnende Pendelstütze,
- Fig. 2:: eine Draufsicht auf diese mit einem Schnitt durch die erfindungsgemäße elastische Halterung,
- Fig. 3:: eine Seitenansicht von der Pendelstütze, teilweise geschnitten,
- Fig. 4a:: eine Frontansicht eines erfindungsgemäßen elastischen Lagerblockes
- Fig. 4b:: eine Seitenansicht des Lagerblockes und
- Fig. 4c:: eine Draufsicht des Lagerblockes.

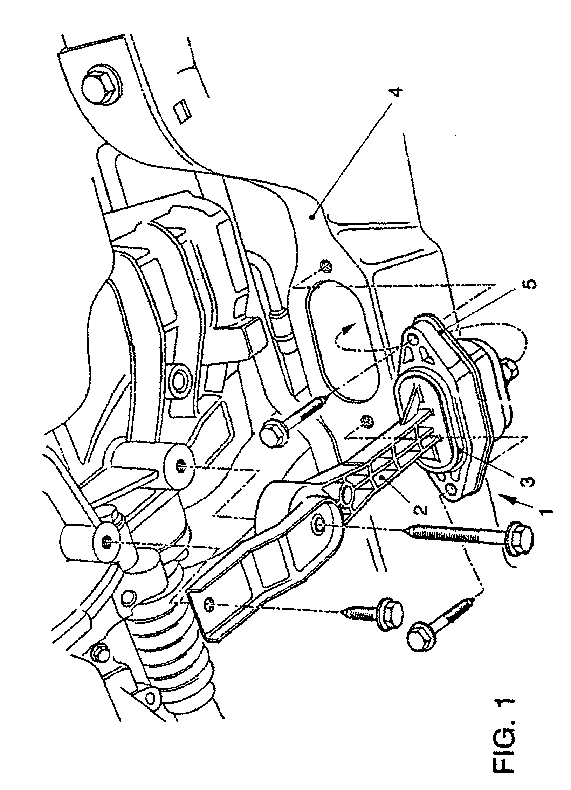

In Fig. 1 ist eine Pendelstütze 1 für einen Motor und ein Getriebe in einem Personenkraftfahrzeug aus einer Sicht von vom unten mit einem Stützarm 2 für die Motorlagerung und einer elastischen Halterung 3 zur Anordnung an einem Hilfsrahmen 4 dargestellt. Die Halterung 3 weist ein Befestigungsglied 5 zur Befestigung der Pendelstütze 1 am Hilfsrahmen 4 auf.

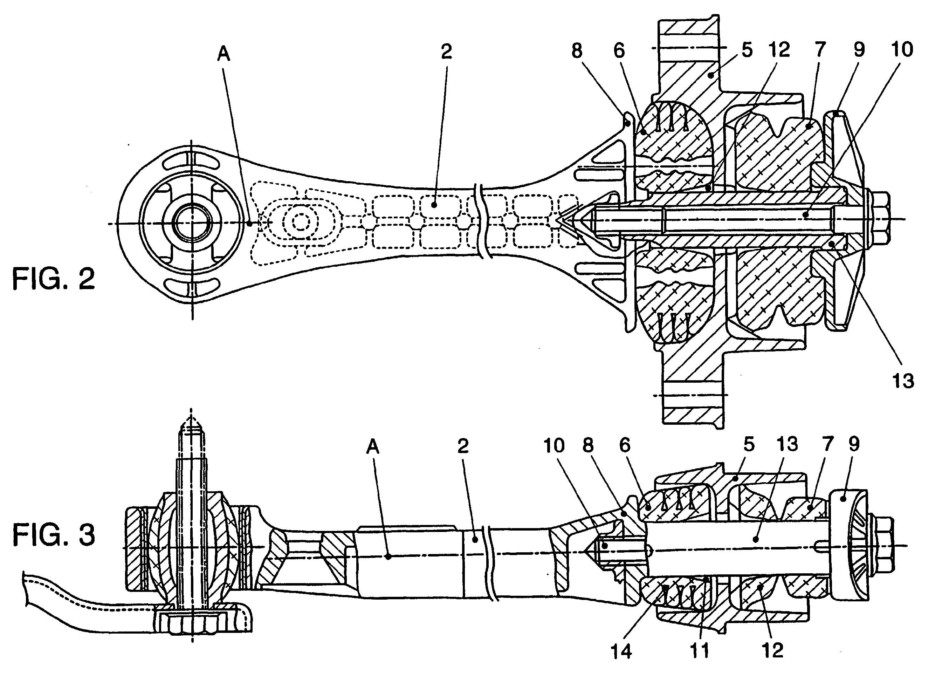

Fig. 2 zeigt einen Schnitt durch die elastische Halterung 3. In Richtung der Längsachse A der Pendelstütze 2 sind zwei elastische Lagerblöcke 6 und 7 angeordnet, die jeweils zwischen einer Anlageplatte 8 und 9 und dem Befestigungsglied 5 durch eine Spannschraube 10, die in Axialbohrungen 11 und 12 der Lagerblöcke 6 und 7 des Befestigungsgliedes 5 in einer Hülse 13 geführt ist, vorgespannt gehaltert sind, wobei das Befestigungsglied 5 käfigartige Aufnahmen für die Lagerblöcke 6 und 7 aufweist. Erfindungsgemäß ist der zwischen dem Befestigungsglied 5 und der stützenseitigen Anlageplatte 8 angeordnete Lagerblock 6 mit Ausnehmungen 14 versehen, die umfangsseitig quer zur Längsachse A und umlaufend ausgebildet sind.

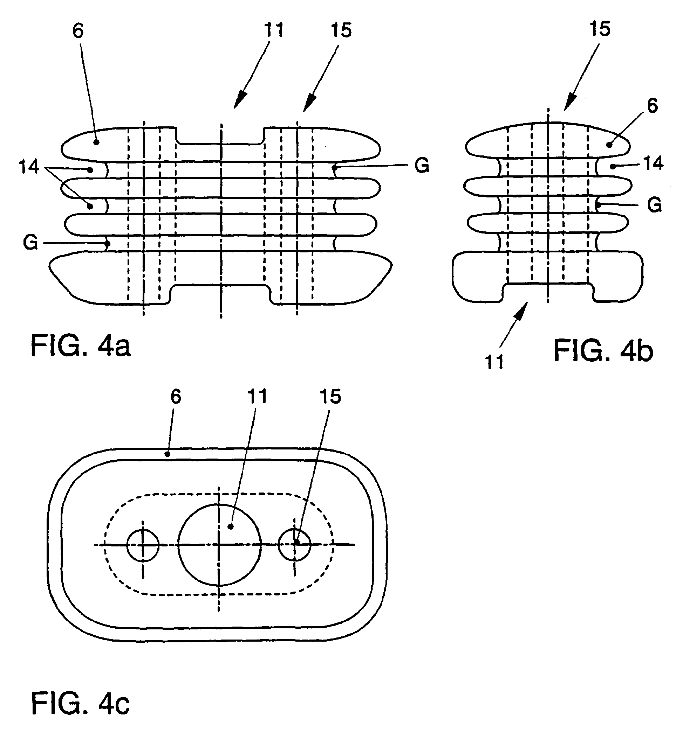

In Fig. 1 ist der in der elastischen Halterung 3 montierte, im wesentlichen quaderförmige Lagerblock 6 im Schnitt und vorgespannt dargestellt, in den Fig. 4a und 4b im ungespannten Zustand. Im Bereich zwischen dem Boden (G) der Ausnehmungen 14 und der Axialbohrung 11 sind zwei achsparallele Durchgangslöcher 15 von 7 mm Durchmesser angeordnet, in die das Material des Lagerblockes 6 beim Verspannen verdrückt wird. Die Dicke des durch die Anordnung der Ausnehmungen 14 ausgenommenen Materials beträgt 30 % und die umschlossene Querschnittsfläche in einer Ausnehmung 14 - das ist die dort übriggebliebene Querschnittsfläche -, gegenüber der des vollen Lagerblockes 35 %, wobei der Lagerblock drei gleich weite und gleich tiefe Ausnehmungen aufweist. Das Material des Lagerblockes 6 ist Gummi mit einer Shore-Härte von 42. Das Material des Lagerblockes 7 ist Gummi mit einer Shore-Härte von 50.

Die elastische Halterung 3 ist im montierten Zustand gemäß den Fig. 1 bis 3 vorgespannt. Die Fig. 2 und 3 zeigen die Anordnung der Lagerblöcke 6 und 7 jeweils zwischen einer käfigartigen Aufnahme des Befestigungsgliedes 5, das fest mit dem Hilfsrahmen 4 verschraubt ist, und einer der Anlageplatten 8 bzw. 9, wobei letztere (9) an einem Spannteller ausgebildet ist. Die Spannschraube 10 steht in Eingriff mit einer im Stützarm 2 angeordneten Gewindebohrung (alternativ: Einlegemutter) und fixiert diesen über die Lagerböcke 8 und 9. Bei einer auftretenden Zugbelastung am Stützarm 2, wie sie beim Abstellschlagen des Motors auftritt, werden der stützenarmseitige Lagerblock 9 entlastet und der diesem abgewandten Lagerblock 9 weiter zusammengedrückt. Dabei kann der Lagerblock 6 einen großen Entspannungsweg zurücklegen und wird in der Halterung mechanisch nicht entkoppelt. Beim anschließenden Zurückschnellen der Pendelstütze nimmt der Lagerblock 6 deshalb vom Beginn der Rückwärtsbewegung an Energie auf, die über die Länge des elastischen Verformungsweges beim Zusammendrücken des Lagerblockes 6 unter Materialverdrückung, in die Durchgangsbohrungen 15 und/oder Ausnehmungen 14, am Ende des Verformungsweges weitgehend abgebaut ist (Zustand gemäß Fig. 2 und 3), so daß ein harter Schlag am Befestigungsglied 5 und am Hilfsrahmen 2 vermieden wird.

## Patentansprüche

1. Pendelstütze für ein Aggregat in einem Kraftfahrzeug, aus einem Stützarm (2), der sich entlang einer Längsachse (A) der Pendelstütze (1) erstreckt und einer elastischen Halterung (3) zur Befestigung des Stützarms (2) am Fahrzeug zwecks Aufnahme und Dämpfung von in Richtung der Längsachse (A) auftretenden Zug- und Druckbelastungen, wobei die Halterung (3) in Richtung der Längsachse (A) aufweist:
- zwei Anlageplatten(8, 9),
- ein zwischen den Anlageplatten (8, 9) angeordnetes Befestigungsglied (5) zur Befestigung der Pendelstütze (1) am Fahrzeug,
- einen ersten elastischen Lagerblock (6), der zwischen der stützarmseitigen Anlageplatte (8) und einer an dem Befestigungsglied (5) vorgesehenen Aufnahme angeordnet ist,
- einen zweiten elastischen Lagerblock (7), der zwischen der stützarmabseitigen Anlageplatte (9) und einer an dem Befestigungsglied (5) vorgesehenen weiteren Aufnahme angeordnet ist, und
- eine Spannschraube (10) zum Vorspannen der elastischen Halterung (3) zwischen den Anlageplatten (8, 9), die sich durch Axialbohrungen (11) der Lagerblöcke (6, 7) und des Befestigungsgliedes (5) erstreckt,
**dadurch gekennzeichnet, daß**
der erste Lagerblock (6) umfangsseitig mehrere quer zur Längsachse (A) ausgebildete umlaufende Ausnehmungen (14) aufweist, sowie weiterhin Durchgangslöcher (15), die parallel zu Längsachse (A) der Pendelstütze (1) verlaufen und daß in die Durchgangslöcher (15) im verspannten zustand Materials des ersten Lagerblocks (6) verdrückt ist.

2. Pendelstütze nach Anspruch 1, **dadurch gekennzeichnet, daß** die Dicke des ausgenommenen Materials gegenüber der Dicke des Lagerblockes (6) und/oder die im Bereich der Ausnehmungen (14) umschlossene Querschnittsfläche gegenüber der des vollen Lagerblockes (6) 20 bis 35 % betragen

3. Pendelstütze nach Anspruch 1 oder 2, **dadurch gekennzeichnet, daß** im Bereich zwischen dem Boden (G) der Ausnehmungen (14) und der Axialbohrung (11) wenigstens zwei achsparallele Durchgangslöcher (15) mit einer Gesamtquerschnittsfläche von 5 bis 15 % von der durch die Ausnehmungen umschlossenen Querschnittsfläche vorgesehen sind.

4. Pendelstütze nach Anspruch 3, **dadurch gekennzeichnet, daß** die Durchgangslöcher einen Durchmesser von mindestens 6 mm aufweisen.

5. Pendelstütze nach einem der Ansprüche 1 bis 4, **dadurch gekennzeichnet, daß** die Dicke des ausgenommenen Materials gegenüber der Dicke des Lagerblockes (6) im wesentlichen 30 % beträgt.

6. Pendelstütze nach einem der Ansprüche 1 bis 5, **dadurch gekennzeichnet, daß** die im Bereich der Ausnehmungen (14) umschlossene Querschnittsfläche gegenüber der des vollen Lagerblockes im wesentlichen 35 % beträgt.

7. Pendelstütze nach einem der Ansprüche 1 bis 6, **dadurch gekennzeichnet, daß** der Lagerblock (6) drei gleich weite und gleich tiefe Ausnehmungen (14) aufweist.

8. Pendelstütze nach einem der Ansprüche 1 bis 7, **dadurch gekennzeichnet, daß** die Lagerblöcke (6;7) aus einem Gummi mit einer Shore-Härte von 40 bis 50 bestehen.

9. Elastisches Aggregatlager (3) zur Aufnahme und Dämpfung von in Richtung der Längsachse (A) des Lagers auftretenden Zug- und Druckbelastungen, insbesondere für Fahrzeuge, umfassend in Richtung der Längsachse (A):
- zwei Anlageplatten (8, 9),
- ein zwischen den Anlageplatten (8, 9) angeordnetes Befestigungsglied (5) zur Befestigung des Lagers am Fahrzeug,
- einen ersten elastischen Lagerblock (6), der zwischen der aggregatseitigen Anlageplatte (8) und einer an dem Befestigungsglied (5) vorgesehenen Aufnahme angeordnet ist,
- einen zweiten elastischen Lagerblock (7), der zwischen der aggregatabseitigen Anlageplatte (9) und einer an dem Befestigungsglied (5) vorgesehenen weiteren Aufnahme angeordnet ist, und
- eine Spannschraube (10) zum Vorspannen des elastischen Aggregatlagers (3) zwischen den Anlageplatten (8, 9), die sich durch Axialbohrungen der Lagerblöcke (6, 7) und des Befestigungsgliedes (5) erstreckt,
**dadurch gekennzeichnet, daß**
der erste Lagerblock (6) zur Erzielung einer höheren Elastizität in axialer Richtung umfangsseitig mehrere quer zur Längsachse (A) ausgebildete umlaufende
Ausnehmungen (14) aufweist, sowie weiterhin Durchgangslöcher (15), die parallel zu Längsachse (A) verlaufen und daß in die Durchgangslöcher (15) im verspannten Zustand Material des ersten Lagerblocks (6) verdrückt ist.

10. Elastisches Aggregatlager nach Anspruch 9, **dadurch gekennzeichnet, daß** im Bereich zwischen dem Boden (G) der Ausnehmungen (14) und der Axialbohrung (11) wenigstens zwei an gegenüberliegenden Seiten der Axialbohrung (11) achsparallele Durchgangslöcher (15) vorgesehen sind

11. Elastisches Aggregatlager nach Anspruch 9 oder 10, **dadurch gekennzeichnet, daß** die Lagerblöcke (6, 7) aus dem gleichen elastischen Material bestehen.

## Claims

1. Oscillating support brace for an assembly in a motor vehicle, comprising a support arm (2) which extends along a longitudinal axis (A) of the oscillating support brace (1), and a flexible mounting (3) for fixing the support arm (2) to the vehicle for the purpose of absorbing and damping tensile and compressive stresses occurring in the direction of the longitudinal axis (A), the mounting (3) in the direction of the longitudinal axis (A) comprising:
- two mounting plates (8, 9),
- a fixing member (5) arranged between the mounting plates (8, 9) for fixing the oscillating support brace (1) to the vehicle,
- a first flexible bearing block (6), which is arranged between the support arm-side mounting plate (8) and a seat provided on the fixing member (5),
- a second flexible bearing block (7), which is arranged between the mounting plate (9) remote from the support arm and a further seat provided on the fixing member (5), and
- a tightening bolt (10) for pre-tensioning the flexible mounting (3) between the mounting plates (8, 9), said bolt extending through axial bores (11) in the bearing blocks (6, 7) and the fixing member (5),
**characterized in that**
the first bearing block (6) peripherally comprises multiple circumferential recesses (14) formed transversely to the longitudinal axis (A), and also through-holes (15), which run parallel to the longitudinal axis (A) of the oscillating support brace (1), and **in that**, in the braced state, material of the first bearing block (6) is pressed into the through-holes (15).

2. Oscillating support brace according to Claim 1, **characterized in that** the thickness of the material removed in relation to the thickness of the bearing block (6) and/or the cross-sectional area enclosed in the area of the recesses (14) in relation to that of the solid bearing block (6) is 20 to 35%.

3. Oscillating support brace according to Claim 1 or 2, **characterized in that** at least two axially parallel through-holes (15) having a total cross-sectional area of 5 to 15% of the cross-sectional area enclosed by the recesses are provided in the area between the bottom (G) of the recesses (14) and the axial bore (11).

4. Oscillating support brace according to Claim 3, **characterized in that** the through-holes have a diameter of at least 6 mm.

5. Oscillating support brace according to any one of Claims 1 to 4, **characterized in that** the thickness of the material removed in relation to the thickness of the bearing block (6) is essentially 30%.

6. Oscillating support brace according to any one of Claims 1 to 5, **characterized in that** the cross-sectional area enclosed in the area of the recesses (14) in relation to that of the solid bearing block is essentially 35%.

7. Oscillating support brace according to any one of Claims 1 to 6, **characterized in that** the bearing block (6) comprises three recesses (14) of equal width and equal depth.

8. Oscillating support brace according to any one of Claims 1 to 7, **characterized in that** the bearing blocks (6, 7) are composed of a rubber having a Shore hardness of 40 to 50.

9. Flexible assembly bearing (3) for absorbing and damping tensile and compressive stresses occurring in the direction of the longitudinal axis (A) of the bearing, especially for vehicles, and in the direction of the longitudinal axis (A) comprising:
- two mounting plates (8, 9),
- a fixing member (5) arranged between the mounting plates (8, 9) for fixing the bearing to the vehicle,
- a first flexible bearing block (6), which is arranged between the assembly-side mounting plate (8) and a seat provided on the fixing member (5),
- a second flexible bearing block (7), which is arranged between the mounting plate (9) remote from the assembly and a further seat provided on the fixing member (5), and
- a tightening bolt (10) for pre-tensioning the flexible assembly bearing (3) between the mounting plates (8, 9), said bolt extending through axial bores in the bearing blocks (6, 7) and the fixing member (5),
**characterized in that**
the first bearing block (6), in order to obtain a greater flexibility in an axial direction, peripherally comprises multiple circumferential recesses (14) formed transversely to the longitudinal axis (A), and also through-holes (15), which run parallel to the longitudinal axis (A), and **in that**, in the braced state, material of the first bearing block (6) is pressed into the through-holes (15).

10. Flexible assembly bearing according to Claim 9, **characterized in that** at least two axially parallel through-holes (15) on opposite sides of the axial bore (11) are provided in the area between the bottom (G) of the recesses (14) and the axial bore (11).

11. Flexible assembly bearing according to Claim 9 or 10, **characterized in that** the bearing blocks (6, 7) are composed of the same flexible material.

## Revendications

1. Support pendulaire pour un ensemble dans un véhicule automobile, constitué d'un bras de support (2) qui s'étend le long d'un axe longitudinal (A) du support pendulaire (1) et d'une fixation élastique (3) pour la fixation du bras de support (2) sur le véhicule dans le but de recevoir et d'amortir les contraintes de traction et de compression se produisant dans la direction de l'axe longitudinal (A), la fixation (3) présentant, dans la direction de l'axe longitudinal (A) :
- deux plaques d'appui (8, 9),
- un organe de fixation (5) disposé entre les plaques d'appui (8, 9) pour la fixation du support pendulaire (1) sur le véhicule,
- un premier bloc-palier élastique (6) qui est disposé entre la plaque d'appui (8) du côté du bras de support et un logement prévu sur l'organe de fixation (5),
- un deuxième bloc-palier élastique (7) qui est disposé entre la plaque d'appui (9) du côté opposé au bras de support et un autre logement prévu sur l'organe de fixation (5), et
- une vis de serrage (10) pour serrer préalablement la fixation élastique (3) entre les plaques d'appui (8, 9), laquelle s'étend à travers des alésages axiaux (11) des blocs-paliers (6, 7) et de l'organe de fixation (5),
**caractérisé en ce que**
le premier bloc-palier (6) présente, du côté périphérique, plusieurs évidements périphériques (14) réalisés transversalement à l'axe longitudinal (A), ainsi que des trous de passage (15) qui s'étendent parallèlement à l'axe longitudinal (A) du support pendulaire (1) et **en ce que**, dans l'état serré, du matériau du premier bloc-palier (6) est pressé dans les trous de passage (15).

2. Support pendulaire selon la revendication 1, **caractérisé en ce que** l'épaisseur du matériau enlevé par rapport à l'épaisseur du bloc-palier (6) et/ou la surface en section transversale occupée dans la région des évidements (14) par rapport à celle du bloc-palier entier (6) représentent 20 à 35%.

3. Support pendulaire selon la revendication 1 ou 2, **caractérisé en ce que** dans la région entre le fond (G) des évidements (14) et l'alésage axial (11), au moins deux trous de passage (15) d'axes parallèles sont prévus, avec une surface totale en section transversale de 5 à 15% de la surface en section transversale occupée par les évidements.

4. Support pendulaire selon la revendication 3, **caractérisé en ce que** les trous de passage présentent un diamètre d'au moins 6 mm.

5. Support pendulaire selon l'une quelconque des revendications 1 à 4, **caractérisé en ce que** l'épaisseur du matériau enlevé par rapport à l'épaisseur du bloc-palier (6) est substantiellement de 30%.

6. Support pendulaire selon l'une quelconque des revendications 1 à 5, **caractérisé en ce que** la surface en section transversale occupée dans la région des évidements (14) par rapport à celle du bloc-palier entier est substantiellement de 35%.

7. Support pendulaire selon l'une quelconque des revendications 1 à 6, **caractérisé en ce que** le bloc-palier (6) présente trois évidements (14) de même largeur et de même profondeur.

8. Support pendulaire selon l'une quelconque des revendications 1 à 7, **caractérisé en ce que** les blocs-paliers (6, 7) se composent d'un caoutchouc ayant une dureté Shore de 40 à 50.

9. Palier élastique (3) pour ensemble, destiné à recevoir et amortir les contraintes de traction et de compression se produisant dans la direction de l'axe longitudinal (A) du palier, notamment pour véhicules automobiles, comprenant, dans la direction de l'axe longitudinal (A) :
- deux plaques d'appui (8, 9),
- un organe de fixation (5) disposé entre les plaques d'appui (8, 9) pour la fixation du palier sur le véhicule,
- un premier bloc-palier élastique (6) qui est disposé entre la plaque d'appui (8) du côté de l'ensemble et un logement prévu sur l'organe de fixation (5),
- un deuxième bloc-palier élastique (7) qui est disposé entre la plaque d'appui (9) du côté opposé à l'ensemble et un autre logement prévu sur l'organe de fixation (5), et
- une vis de serrage (10) pour serrer préalablement le palier élastique (3) pour ensemble entre les plaques d'appui (8, 9), laquelle s'étend à travers des alésages axiaux des blocs-paliers (6, 7) et de l'organe de fixation (5),
**caractérisé en ce que**
le premier bloc-palier (6), pour obtenir une plus grande élasticité dans la direction axiale, présente, du côté périphérique, plusieurs évidements périphériques (14) réalisés transversalement à l'axe longitudinal (A) ainsi que des trous de passage (15) qui s'étendent parallèlement à l'axe longitudinal (A) et **en ce que**, dans l'état serré, du matériau du premier bloc-palier (6) est pressé dans les trous de passage (15).

10. Palier élastique pour ensemble selon la revendication 9, **caractérisé en ce que** dans la région entre le fond (G) des évidements (14) et l'alésage axial (11), au moins deux trous de passage (15) d'axes parallèles sont prévus sur des côtés opposés de l'alésage axial (11).

11. Palier élastique pour ensemble selon la revendication 9 ou 10, **caractérisé en ce que** les blocs-paliers (6, 7) se composent du même matériau élastique.
